# EUROPÄISCHE PATENTSCHRIFT

(11) **EP 2 478 612 B1**
(45) Veröffentlichungstag und Bekanntmachung des Hinweises auf die Patenterteilung: **12.09.2018**
(21) Anmeldenummer: 10737056.1
(22) Anmeldetag: 28.07.2010
(51) Int. Cl.: H02J 7/00, H02J 50/10, H02J 7/02, B25F 5/00

(54) **HANDWERKZEUGAKKULADEMITTEL**
RECHARGEABLE BATTERY FOR HAND TOOL
MOYEN DE CHARGE D'ACCUMULATEUR POUR OUTIL À MAIN

(30) Priorität: 14.09.2009 DE 102009029411
(43) Veröffentlichungstag der Anmeldung: 25.07.2012
(73) Patentinhaber: Robert Bosch GmbH, 70442 Stuttgart (DE)
(72) Erfinder: MATTHIAS, Wolf, 70469 Stuttgart (DE); HANS, Tobias, 70176 Stuttgart (DE); FLINSPACH, Gunter, 71229 Leonberg (DE); OSSWALD, Alexander, 70599 Stuttgart (DE); GLAUNING, Rainer, 70771 Leinfelden-Echterdingen (DE)
(86) Internationale Anmeldenummer: PCT/EP2010/060945
(87) Internationale Veröffentlichungsnummer: WO 2011/029663

(56) Entgegenhaltungen:
- DE-A1-102006 042 602
- US-A- 5 550 452
- US-A- 6 016 046
- US-A- 6 040 680
- US-A1- 2002 089 306
- US-A1- 2006 108 974
- US-A1- 2007 236 179

## Beschreibung

### Stand der Technik

Die Erfindung geht aus von einem Handwerkzeugakkulademittel nach dem Oberbegriff des Anspruchs 1.

Aus der US 6 016 046 A ist bereits ein Handwerkzeugakkulademittel, insbesondere für einen Handwerkzeugmaschinenakku, mit wenigstens einem Akkuaufnahmebereich zum lösbaren Anbringen zumindest einer Akkueinheit und wenigstens einem Akkukontaktmittel, das dazu vorgesehen ist, mit einem Maschinenkontaktmittel der zumindest einen Akkueinheit verbunden zu werden, bekannt, wobei wenigstens ein Ladekopplungsmittel dazu vorgesehen ist, eine drahtlos übertragene Energie zu empfangen.

Aus der DE 10 2006 042 602 A1 geht ein Batteriepack mit ersten Mitteln zur lösbaren mechanischen und elektrischen Kopplung mit einem Elektrowerkzeug und mit zweiten Mitteln, über die eine induktive Kopplung mit einem Ladegerät herstellbar ist, hervor. Die zweiten Mittel sind in den Batteriepack integriert.

### Offenbarung der Erfindung

Die Erfindung offenbart ein Handwerkzeugakkulademittel entsprechend des unabhängigen Anspruchs 1. Weitere erfindungsgemäße Ausgestaltungen werden durch die abhängigen Ansprüche offenbart.

Es wird vorgeschlagen, dass das Akkukontaktmittel des Handwerkzeugakkulademittels dazu vorgesehen ist, mit dem einen Maschinenkontaktmittel der zumindest einen Akkueinheit werkzeuglos lösbar elektrisch und mechanisch verbunden zu werden. Unter einem "Akkukontaktmittel" soll insbesondere ein Mittel verstanden werden, das in einem betriebsbereiten Zustand zumindest einen elektrischen Kontakt zu einer Akkueinheit herstellt. Vorzugsweise ist das Akkukontaktmittel dazu vorgesehen, eine Energie mit einer Akkueinheit bidirektional auszutauschen, das heißt, die Akkueinheit zu laden und zu entladen. Vorteilhaft stellt das Akkukontaktmittel in einem betriebsbereiten Zustand eine feste mechanische Verbindung zu der Akkueinheit bereit. Insbesondere soll unter einem "lösbaren Kontaktmittel" ein Kontaktmittel verstanden werden, das eine von einem Bediener lösbare elektrische und insbesondere mechanische Verbindung herstellt. Vorteilhaft ist die Verbindung werkzeuglos lösbar. Unter dem Begriff "Akkueinheit" soll insbesondere eine Vorrichtung mit einem Energiespeicher verstanden werden, der dazu vorgesehen ist, insbesondere einen Motor einer Handwerkzeugmaschine mit einer elektrischen Energie zu versorgen. Vorteilhaft ist der Energiespeicher als zumindest eine, dem Fachmann als sinnvoll erscheinende Akkuzelle und insbesondere als eine Lithium-Akkuzelle ausgebildet. Vorzugsweise ist die Akkueinheit als ein Handwerkzeugmaschinenakku ausgebildet. Unter "vorgesehen" soll insbesondere speziell ausgestattet, ausgelegt und/oder programmiert verstanden werden. Unter einem "Ladekopplungsmittel" soll insbesondere ein Mittel verstanden werden, das zumindest während eines Betriebs eine Energie empfängt, mit der insbesondere das Akkukontaktmittel in zumindest einem Betriebszustand zumindest eine Akkueinheit lädt. Vorteilhaft empfängt das Ladekopplungsmittel zumindest eine Energie mit einer Leistung von wenigstens 10 Watt, vorteilhaft wenigstens 100 Watt, besonders vorteilhaft wenigstens 500 Watt. Unter einem "drahtlosen Ladekopplungsmittel" soll insbesondere ein Ladekopplungsmittel verstanden werden, das eine Energie empfängt, die durch zumindest ein elektrisch unleitendes Medium, das heißt durch ein Material mit einem spezifischen Widerstand von mehr als 0,1 Ω·mm²/m, vorteilhaft mehr als 1 Ω·mm²/m, besonders vorteilhaft mehr als 10 Ω·mm²/m, an das Ladekopplungsmittel übertragen worden ist. Vorteilhaft empfängt das drahtlose Ladekopplungsmittel eine nach dem eCoupled-Standard übertragene Energie, das heißt eine induktiv übertragene Energie. Dabei wird die Energieübertragung von einer Überwachungselektronik überwacht. Alternativ und/oder zusätzlich könnte das drahtlose Ladekopplungsmittel eine kapazitive Energie, eine elektromagnetische Energie und/oder eine mechanische Energie empfangen. Durch die erfindungsgemäße Ausgestaltung des Handwerkzeugakkulademittels kann konstruktiv einfach und preiswert ein Mittel bereitgestellt werden, durch das eine herkömmliche Akkueinheit mit einer vorteilhaft drahtlos übertragenen Energie geladen werden kann, wodurch insbesondere eine hohe Sicherheit und ein hoher Komfort erreicht werden können. Vorteilhaft ist das Handwerkzeugakkuiademittel als ein Handwerkzeugakkuladeadapter, besonders vorteilhaft als ein Handwerkzeugmaschinenakkuladeadapter ausgebildet.

In einer weiteren Ausgestaltung wird vorgeschlagen, dass das Handwerkzeugakkulademittel wenigstens ein lösbares Maschinenkontaktmittel aufweist, das dazu vorgesehen ist, lösbar elektrisch und mechanisch mit einem Akkukontaktmittel einer Handwerkzeugmaschine verbunden zu werden sowie eine Energie an die Handwerkzeugmaschine zu übertragen. Unter einem "Maschinenkontaktmittel" soll insbesondere ein Mittel verstanden werden, das in zumindest einem Betriebszustand zumindest einen elektrischen Kontakt zu einer Handwerkzeugmaschine herstellt. Vorteilhaft stellt das Maschinenkontaktmittel in einem betriebsbereiten Zustand auch eine feste, insbesondere lösbare mechanische Verbindung zu der Handwerkzeugmaschine bereit. Unter einer "Handwerkzeugmaschine" sollen sämtliche, dem Fachmann als sinnvoll erscheinende Handwerkzeugmaschinen, die dazu vorgesehen sind, mit einer Akkueinheit betrieben zu werden, wie insbesondere Bohrmaschinen, Bohrhämmer, Sägen, Hobel, Schrauber, Fräsen, Schleifer, Multifunktionswerkzeuge und/oder insbesondere Bohrschrauber, verstanden werden. Unter "übertragen" soll in diesem Zusammenhang insbesondere verstanden werden, dass das Maschinenkontaktmittel eine Energie aus der Akkueinheit an die Handwerkzeugmaschine weiterleitet. Durch das lösbare Maschinenkontaktmittel kann das Handwerkzeugakkuiademittel vorteilhaft zwischen die Akkueinheit und die Handwerkzeugmaschine geschaltet werden. Dadurch ist das Handwerkzeugakkuiademittel mit besonders vielen verschiedenen, handelsüblichen Typen von Akkueinheiten kombinierbar und insbesondere auch mit Akkueinheiten kombinierbar, bei denen ein Maschinenkontaktmittel und ein Ladeenergieeingang teilweise einstückig ausgebildet sind. Vorteilhaft können eine Handwerkzeugmaschine und eine Akkueinheit, die dazu vorgesehen sind, direkt mit der Handwerkzeugmaschine verbunden zu werden, für eine Verwendung mit dem Handwerkzeugakkulademittel unverändert bleiben.

Des Weiteren wird vorgeschlagen, dass das Akkukontaktmittel und das Maschinenkontaktmittel komplementär ausgebildet sind, wodurch das Handwerkzeugakkuiademittel mit einer Akkueinheit kombinierbar ist, die auch direkt mit der Handwerkzeugmaschine verbunden werden kann. Das heißt, eine ursprüngliche Akkueinheit ist vorteilhaft mit dem Handwerkzeugakkulademittel nachrüstbar. Unter der Wendung "komplementär ausgebildet" soll insbesondere verstanden werden, dass das Akkukontaktmittel und das Maschinenkontaktmittel zwei zueinander passende Gegenstücke eines Kontaktmittelsystems, insbesondere eine Steckverbindung, bilden. Das Akkukontaktmittel des Handwerkzeugakkulademittels ist dazu vorgesehen, mit einem Maschinenkontaktmittel der Akkueinheit verbunden zu werden. Das Maschinenkontaktmittel des Handwerkzeugakkulademittels ist dazu vorgesehen, mit einem Akkukontaktmittel der Handwerkzeugmaschine verbunden zu werden.

Ferner wird vorgeschlagen, dass das Ladekopplungsmittel eine Energieempfangsspule aufweist. Unter einer "Energieempfangsspule" soll insbesondere eine Spule verstanden werden, die dazu vorgesehen ist, eine induktiv übertragene Energie in eine elektrische Energie zu wandeln. Durch die Energieempfangsspule kann konstruktiv einfach, preiswert und mit geringem Bauraumaufwand eine besonders hohe Leistung empfangen werden.

Zudem wird vorgeschlagen, dass das Maschinenkontaktmittel eine Schutzvorrichtung aufweist, die dazu vorgesehen ist, durch ein elektrisch und/oder mechanisch wirkendes Mittel eine Energieaufnahme von einem drahtgebundenen Ladegerät zu verhindern. Insbesondere soll unter einer "Schutzvorrichtung" in diesem Zusammenhang eine Vorrichtung verstanden werden, die durch ein elektrisch und/oder vorteilhaft mechanisch wirkendes Mittel verhindert, dass ein drahtgebundenes Ladegerät in zumindest einem Betriebszustand, wie beispielsweise bei einem Ladevorgang über das Ladekopplungsmittel, eine Energie auf das Maschinenkontaktmittel überträgt. Vorzugsweise weist das Maschinenkontaktmittel des Handwerkzeugakkulademittels im Vergleich zu dem Maschinenkontaktmittel der Akkueinheit ein zusätzliches elektrisches und/oder insbesondere mechanisches Element auf. Unter einer "Energieaufnahme" soll insbesondere eine Energieübertragung von einem dritten Element auf das Maschinenkontaktmittel des Handwerkzeugakkulademittels verstanden werden. Unter einem "drahtgebundenen Ladegerät" soll insbesondere ein Ladegerät verstanden werden, das dazu vorgesehen ist, bei einem Ladevorgang eine Energie über einen leitenden Kontakt an eine Akkueinheit zu übertragen. Insbesondere weist ein Ladegerät zumindest einen Spannungswandler auf. Durch die Schutzvorrichtung kann vorteilhaft verhindert werden, dass das Handwerkzeugakkulademittel die Akkueinheit insbesondere gleichzeitig mit einer Energie von einem drahtgebundenen Ladegerät und einer von dem Ladekopplungsmittel empfangenen Energie lädt, wodurch eine solche Fehlbedienung vermieden und Schäden an der Akkueinheit verhindert werden können.

In einer vorteilhaften Ausbildung der Erfindung wird vorgeschlagen, dass die Schutzvorrichtung dazu vorgesehen ist, mechanisch eine elektrische Kontaktierung des drahtgebundenen Ladegeräts zu verhindern, wodurch eine besonders kostengünstige und konstruktiv einfache Schutzvorrichtung erreicht werden kann. Unter der Wendung "eine Kontaktierung zu verhindern" soll insbesondere verstanden werden, dass die Schutzvorrichtung mechanisch eine elektrische Verbindung des drahtgebundenen Ladegeräts mit dem Maschinenkontaktmittel, insbesondere über eine räumliche Ausgestaltung eines Gehäuses des Handwerkzeugakkulademittels, verhindert.

Weiterhin wird vorgeschlagen, dass die Schutzvorrichtung elektronische Bauteile aufweist, die einen Stromfluss in das Maschinenkontaktmittel des Handwerkzeugakkulademittels hinein verhindern.

In einer weiteren Ausgestaltung wird vorgeschlagen, dass das Handwerkzeugakkulademittel eine Überwachungselektronik aufweist, die dazu vorgesehen ist, zumindest einen Ladevorgang zu überwachen. Unter einer "Überwachungselektronik" soll insbesondere eine Elektronik verstanden werden, die eine Spannung, einen Strom und/oder eine Temperatur der Akkueinheit zumindest während eines Ladevorgangs überwacht. Vorteilhaft beeinflusst die Überwachungselektronik, zumindest von einer dieser Kenngrößen abhängig, den Ladevorgang. Durch die Überwachungselektronik kann vorteilhaft eine Lebensdauer der Akkueinheit verlängert und insbesondere eine Beschädigung der Akkueinheit vermieden werden.

Des Weiteren wird vorgeschlagen, dass das Handwerkzeugakkulademittel ein Verbindungselement aufweist, welches das Akkukontaktmittel mechanisch und elektrisch untrennbar mit dem Ladekopplungsmittel verbindet, wobei die Kontaktmittel und das Ladekopplungsmittel auf zumindest zwei verschiedenen Seiten des Akkuaufnahmebereichs angeordnet sind. Vorteilhaft sind die zwei verschiedenen Seiten wenigstens 2 cm voneinander beabstandet und/oder vorteilhaft auf gegenüberliegenden Seiten des Akkuaufnahmebereichs angeordnet. Durch das Verbindungselement kann eine besonders vorteilhafte Anordnung des Ladekopplungsmittels relativ zu zumindest einem der Kontaktmittel, insbesondere wenn die Akkueinheit getrennt von der Handwerkzeugmaschine geladen werden soll, erreicht werden.

Ferner wird vorgeschlagen, dass ein konkaver Aufnahmebereich des Ladekopplungsmittels dazu vorgesehen ist, eine Handwerkzeugmaschine zumindest teilweise zu umschließen, wodurch eine besonders vorteilhafte Anordnung des Ladekopplungsmittels erreicht werden kann, insbesondere wenn die Akkueinheit mit der Handwerkzeugmaschine verbunden geladen werden soll. Unter der Wendung "zumindest teilweise zu umschließen" soll insbesondere verstanden werden, dass das Ladekopplungsmittel einen konkaven Aufnahmebereich aufweist.

In besonders vorteilhafter Weise ist das Akkukontaktmittel dazu vorgesehen, eine Energie mit der Akkueinheit bidirektional auszutauschen

Zudem geht die Erfindung aus von einem System mit einem Handwerkzeugakkulademittel, mit einer Akkueinheit und insbesondere mit einer Handwerkzeugmaschine, wodurch Komponenten des Systems besonders vorteilhaft aufeinander abgestimmt werden können.

Es wird vorgeschlagen, dass das Akkukontaktmittel des Handwerkzeugakkulademittels das Handwerkzeugakkulademittel lösbar mechanisch und elektrisch mit dem Maschinenkontaktmittel der Akkueinheit verbindet.

Weiterhin wird vorgeschlagen, dass das Handwerkzeugakkulademittel dazu vorgesehen ist, bei einer Trennung der Akkueinheit von der Handwerkzeugmaschine mit der Akkueinheit verbunden zu bleiben, wodurch die Akkueinheit besonders komfortabel getrennt von der Handwerkzeugmaschine drahtlos geladen werden kann. Unter der Wendung "bei einer Trennung" soll insbesondere ein Zeitraum verstanden werden, der mit einer Trennung der Akkueinheit von der Handwerkzeugmaschine beginnt und spätestens mit einem Verbinden der Akkueinheit mit der Handwerkzeugmaschine endet.

In einer vorteilhaften Ausbildung der Erfindung wird vorgeschlagen, dass das Handwerkzeugakkulademittel dazu vorgesehen ist, nach einer Entnahme der Akkueinheit mit der Handwerkzeugmaschine verbunden zu bleiben, wodurch die Akkueinheit besonders komfortabel mit der Handwerkzeugmaschine verbunden drahtlos geladen werden kann.

Schließlich wird ein System mit einem Handwerkzeugakkulademittel und mit einer Akkueinheit und mit einer Handwerkzeugmaschine vorgeschlagen, wobei das Akkukontaktmittel des Handwerkzeugakkulademittels sowie das Akkukontaktmittel der Handwerkzeugmaschine als weiblicher Teil und das Maschinenkontaktmittel der Akkueinheit sowie das Maschinenkontaktmittel der Akkueinheit als männlicher Teil einer Steckverbindung ausgebildet sind.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in einer schematischen Darstellung:
- Fig. 1: ein erfindungsgemäßes System mit einem Handwerkzeugakkulademittel, das ein Ladekopplungsmittel aufweist, welches an einer Akkueinheit angeordnet ist,
- Fig. 2: ein zweites Ausführungsbeispiel des Handwerkzeugakkulademittels aus Figur 1 mit einem Ladekopplungsmittel, das an einer Handwerkzeugmaschine angeordnet ist und
- Fig. 3: ein drittes Ausführungsbeispiel des Handwerkzeugakkulademittels aus Figur 1 mit einem Ladekopplungsmittel, das eine Handwerkzeugmaschine umschließt.

### Beschreibung der Ausführungsbeispiele

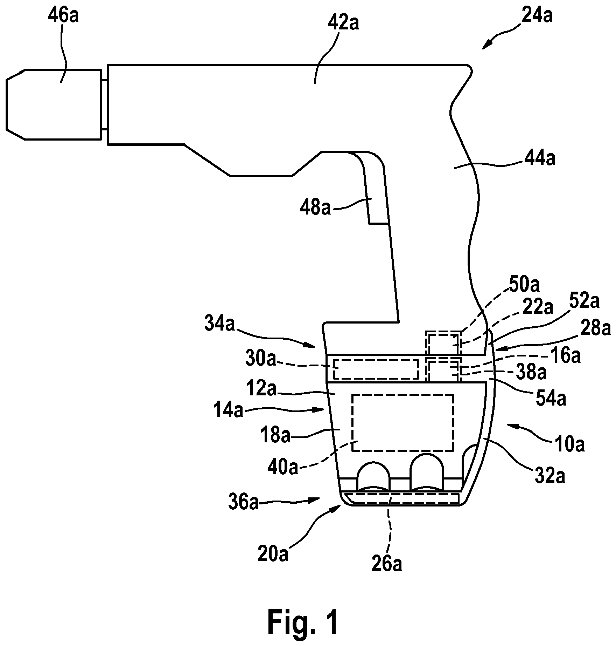

Figur 1 zeigt ein System mit einem Handwerkzeugakkulademittel 10a, mit einer Akkueinheit 18a, und mit einer Handwerkzeugmaschine 24a. Die Akkueinheit 18a ist als ein Handwerkzeugmaschinenakku 12a ausgebildet. Die Akkueinheit 18a weist ein lösbares Maschinenkontaktmittel 38a und einen Energiespeicher 40a mit mehreren, nicht näher dargestellten Lithium-Ionen-Akkuzellen auf. Die Handwerkzeugmaschine 24a ist als ein Akkubohrschrauber ausgebildet. Es weist ein pistolenförmiges Gehäuse 42a mit einem Handgriff 44a, einer Einsatzwerkzeugbefestigung 46a, einem Bedienelement 48a und einem Akkukontaktmittel 50a auf. Der Handgriff 44a ist auf einer der Einsatzwerkzeugbefestigung 46a abgewandten Seite der Handwerkzeugmaschine 24a angeordnet. Auf einer Seite des Handgriffs 44a, die in Richtung der Einsatzwerkzeugbefestigung 46a weist, ist das Bedienelement 48a angeordnet, das dazu vorgesehen ist, einen nicht näher dargestellten Motor der Handwerkzeugmaschine 24a zu steuern.

Das Handwerkzeugakkulademittel 10a ist in einem gezeigten betriebsbereiten Zustand auf einem dem Bedienelement 48a abgewandten Ende des Handgriffs 44a, an dem das Akkukontaktmittel 50a der Handwerkzeugmaschine 24a angeordnet ist, mit dem Handgriff 44a verbunden. Das Handwerkzeugakkulademittel 10a weist einen Akkuaufnahmebereich 14a, ein lösbares Akkukontaktmittel 16a, ein Ladekopplungsmittel 20a und ein lösbares Maschinenkontaktmittel 22a auf. Mittels des Maschinenkontaktmittels 22a ist das Handwerkzeugakkulademittel 10a mechanisch und elektrisch mit dem Akkukontaktmittel 50a der Handwerkzeugmaschine 24a von einem Bediener trennbar verbunden. Während eines Betriebs der Handwerkzeugmaschine 24a überträgt das Maschinenkontaktmittel 22a eine Energie an die Handwerkzeugmaschine 24a. Zudem könnte das Maschinenkontaktmittel 22a eine Kenngröße eines Zustands der Akkueinheit 18a, insbesondere eine Kenngröße, die eine Temperatur der Akkueinheit 18a beschreibt, übertragen.

Von dem Maschinenkontaktmittel 22a gesehen hinter dem Akkukontaktmittel 16a ist der Akkuaufnahmebereich 14a angeordnet. In dem Akkuaufnahmebereich 14a ist in dem betriebsbereiten Zustand die Akkueinheit 18a angebracht. Das lösbare Akkukontaktmittel 16a des Handwerkzeugakkulademittels 10a verbindet das Handwerkzeugakkulademittel 10a, von einem Bediener trennbar, mechanisch und elektrisch mit dem Maschinenkontaktmittel 38 der Akkueinheit 18a. Das Akkukontaktmittel 16a könnte ebenfalls eine Kenngröße eines Zustands der Akkueinheit 18a übertragen.

Das Akkukontaktmittel 16a des Handwerkzeugakkulademittels 10a und das Akkukontaktmittel 50a der Handwerkzeugmaschine 24a sind komplementär zu dem Maschinenkontaktmittel 22a des Handwerkzeugakkulademittels 10a und dem Maschinenkontaktmittel 38a der Akkueinheit 18a ausgebildet. Die Akkukontaktmittel 16a, 50a sind als der weibliche Teil einer Steckverbindung ausgebildet. Die Maschinenkontaktmittel 22a, 38a sind als der männliche Teil einer Steckverbindung ausgebildet.

Das Ladekopplungsmittel 20a empfängt während eines Ladevorgangs eine drahtlos übertragene Energie. Eine nicht näher dargestellte Ladekopplungsstation des Systems sendet diese Energie während eines Ladevorgangs aus. Das Ladekopplungsmittel 20a weist eine Energieempfangsspule 26a auf. Die Energieempfangsspule 26a ist als eine Spule mit einem nicht näher dargestellten Ferritkern ausgebildet. Eine Spule der Ladekopplungsstation und die Energieempfangsspule 26a bilden im betriebsbereiten Zustand gemeinsam einen Resonanzkreis.

Das Maschinenkontaktmittel 22a weist eine Schutzvorrichtung 28a auf. Die Schutzvorrichtung 28a verhindert, dass durch eine Fehlbedienung das Handwerkzeugakkulademittel 10a eine Energie von einem drahtgebundenen Ladegerät aufnimmt. Die Schutzvorrichtung 28a weist einen Vorsprung 52a auf, der an ein Gehäuse 54a des Handwerkzeugakkulademittels 10a angeformt ist. Der Vorsprung 52a verhindert, dass ein Bediener das Handwerkzeugakkulademittel 10a mechanisch mit einem nicht näher dargestellten drahtgebundenen Ladegerät, das zum Laden der Akkueinheit 18a vorgesehen ist, kontaktiert. Des Weiteren weist die Schutzvorrichtung 28a nicht näher dargestellte elektronische Bauteile auf, die einen Stromfluss in das Maschinenkontaktmittel 22a der Handwerkzeugakkulademittel 10a hinein verhindern. Zumindest eines der elektronischen Bauteile ist als Diode ausgebildet.

Ferner weist das Handwerkzeugakkulademittel 10a eine Überwachungselektronik 30a auf. Die Überwachungselektronik 30a beendet einen Ladevorgang, wenn ein vorgesehener Ladezustand, das heißt eine vorgesehene Ladespannung, der Akkueinheit 18a erreicht ist.

Des Weiteren weist das Handwerkzeugakkulademittel 10a ein Verbindungselement 32a auf. Das Verbindungselement 32a verbindet das Akkukontaktmittel 16a und das Maschinenkontaktmittel 22a mechanisch und elektrisch untrennbar mit dem Ladekopplungsmittel 20a. Dabei sind die Kontaktmittel 16a, 22a und das Ladekopplungsmittel 20a auf zwei gegenüberliegenden Seiten 34a, 36a des Akkuaufnahmebereichs 14a angeordnet. Das Verbindungselement 32a ist für ein Einbringen der Akkueinheit 18a teilweise elastisch verformbar ausgebildet.

Wenn der Bediener die Akkueinheit 18a von der Handwerkzeugmaschine 24a trennt, bleibt das Handwerkzeugakkulademittel 10a bei einem Standardbetrieb mit der Akkueinheit 18a verbunden, das heißt der Bediener trennt, wenn er die Akkueinheit 18a auswechselt, das Handwerkzeugakkulademittel 10a von der Handwerkzeugmaschine 24a.

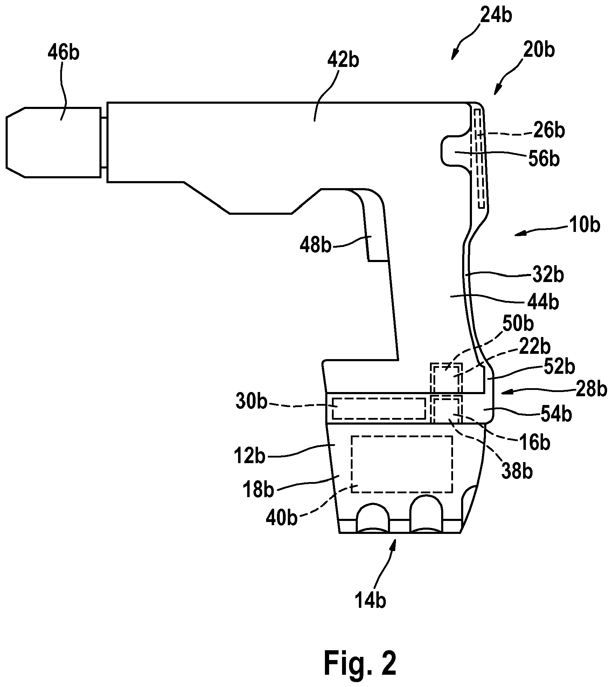

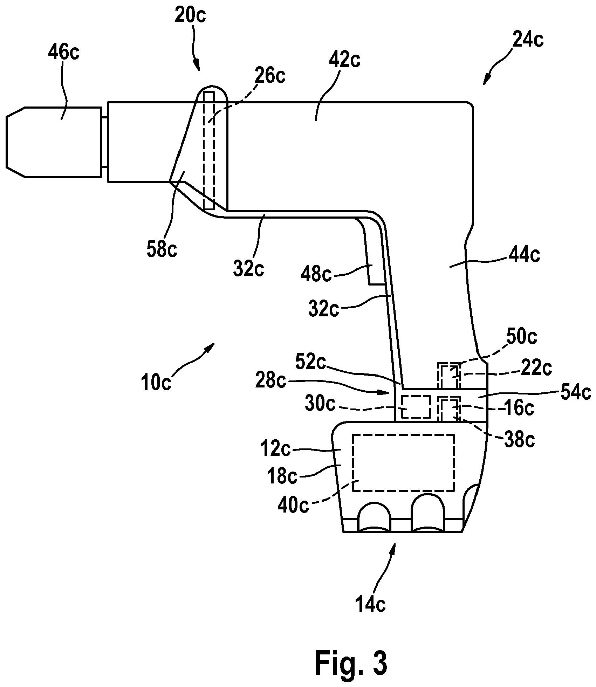

In den Figuren 2 und 3 sind zwei weitere Ausführungsbeispiele der Erfindung gezeigt. Zur Unterscheidung der Ausführungsbeispiele ist der Buchstabe a in den Bezugszeichen des Ausführungsbeispiels in der Figur 1 durch die Buchstaben b und c in den Bezugszeichen der Ausführungsbeispiele in den Figuren 2 und 3 ersetzt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung der anderen Ausführungsbeispiele, insbesondere in der Figur 1, verwiesen werden kann.

Figur 2 zeigt ein System mit einem Handwerkzeugakkulademittel 10b, einer Akkueinheit 18b und einer Handwerkzeugmaschine 24b. Die Handwerkzeugmaschine 24b weist ein pistolenförmiges Gehäuse 42b und eine Einsatzwerkzeugbefestigung 46b auf. Das Handwerkzeugakkulademittel 10b weist einen Akkuaufnahmebereich 14b, ein lösbares Akkukontaktmittel 16b und ein Ladekopplungsmittel 20b auf. Das Akkukontaktmittel 16b ist in einem ladebereiten Zustand der Akkueinheit 18b elektrisch leitend mit der Akkueinheit 18b verbunden. Das Ladekopplungsmittel 20b empfängt während eines Ladevorgangs eine drahtlos übertragene Energie.

Das Ladekopplungsmittel 20b ist in einem betriebsbereiten Zustand an einer der Einsatzwerkzeugbefestigung 46b abgewandten Seite des Gehäuses 42b angeordnet. Das Ladekopplungsmittel 20b weist Rastelemente 56b auf, die das Ladekopplungsmittel 20b mit dem Gehäuse 42b der Handwerkzeugmaschine 24b verbinden. Die Rastelemente 56b sind in nicht näher dargestellten Lüftungsschlitzen der Handwerkzeugmaschine 24b eingerastet. Das Handwerkzeugakkulademittel 10b bleibt bei einem Austausch der Akkueinheit 18b mit der Handwerkzeugmaschine 24b verbunden.

Figur 3 zeigt ein System mit einem Handwerkzeugakkulademittel 10c, einer Akkueinheit 18c und einer Handwerkzeugmaschine 24c. Die Handwerkzeugmaschine 24c weist ein pistolenförmiges Gehäuse 42c und eine Einsatzwerkzeugbefestigung 46c auf. Das Handwerkzeugakkulademittel 10c weist einen Akkuaufnahmebereich 14c, ein lösbares Akkukontaktmittel 16c und ein Ladekopplungsmittel 20c auf. Das Akkukontaktmittel 16c ist in einem ladebereiten Zustand der Akkueinheit 18c elektrisch leitend mit der Akkueinheit 18c verbunden. Das Ladekopplungsmittel 20c empfängt während eines Ladevorgangs eine drahtlos übertragene Energie.

Das Ladekopplungsmittel 20c umschließt das Gehäuse 42c der Handwerkzeugmaschine 24c auf einer Ebene in einem der Einsatzwerkzeugbefestigung 46c zugewandten Bereich. Dazu weist das Ladekopplungsmittel 20c einen im Wesentlichen scheibenförmigen Aufnahmebereich 58c für die Handwerkzeugmaschine auf. Der Aufnahmebereich 58c wird von einer konkaven Fläche des Ladekopplungsmittels 20c begrenzt. Ein Verbindungselement 32c des Handwerkzeugakkulademittels 10c erstreckt sich an einer der Einsatzwerkzeugbefestigung 46c zugewandten Seite eines Handgriffs 44a der Handwerkzeugmaschine 24c und in Richtung der Einsatzwerkzeugbefestigung 46c zwischen dem Akkukontaktmittel 16c und dem Aufnahmebereich 58c.

## Patentansprüche

1. Handwerkzeugakkulademittel, insbesondere für einen Handwerkzeugmaschinenakku (12a; 12b; 12c), umfassend wenigstens einen Akkuaufnahmebereich (14a; 14b; 14c) zum lösbaren Anbringen zumindest einer Akkueinheit (18a; 18b; 18c) und wenigstens ein Akkukontaktmittel (16a; 16b; 16c), das dazu vorgesehen ist, mit einem Maschinenkontaktmittel (38a; 38b; 38c) der zumindest einen Akkueinheit (18a; 18b; 18c) verbunden zu werden, wobei wenigstens ein Ladekopplungsmittel (20a; 20b; 20c) dazu eingerichtet ist, eine drahtlos übertragene Energie zu empfangen, **dadurch gekennzeichnet, dass** das Akkukontaktmittel (16a; 16b; 16c) des Handwerkzeugakkulademittels dazu eingerichtet ist, mit dem einen Maschinenkontaktmittel (38a; 38b; 38c) der zumindest einen Akkueinheit (18a; 18b; 18c) werkzeuglos lösbar elektrisch und mechanisch verbunden zu werden.

2. Handwerkzeugakkulademittel nach Anspruch 1, **gekennzeichnet durch** wenigstens ein lösbares Maschinenkontaktmittel (22a; 22b; 22c), das dazu eingerichtet ist, lösbar elektrisch und mechanisch mit einem Akkukontaktmittel (50a; 50b; 50c) einer Handwerkzeugmaschine (24a; 24b; 24c) verbunden zu werden sowie eine Energie an die Handwerkzeugmaschine (24a; 24b; 24c) zu übertragen.

3. Handwerkzeugakkulademittel nach Anspruch 2, **dadurch gekennzeichnet, dass** das Akkukontaktmittel (16a; 16b; 16c) und das Maschinenkontaktmittel (22a; 22b; 22c) komplementär ausgebildet sind.

4. Handwerkzeugakkulademittel nach einem der vorhergehenden Ansprüche, **dadurch gekennzeichnet, dass** das Ladekopplungsmittel (20a; 20b; 20c) eine Energieempfangsspule (26a; 26b; 26c) aufweist.

5. Handwerkzeugakkulademittel zumindest nach Anspruch 2, **dadurch gekennzeichnet, dass** das Maschinenkontaktmittel (22a; 22b; 22c) eine Schutzvorrichtung (28a; 28b; 28c) aufweist, die dazu eingerichtet ist, durch ein elektrisch und/oder mechanisch wirkendes Mittel eine Energieaufnahme von einem drahtgebundenen Ladegerät zu verhindern.

6. Handwerkzeugakkulademittel nach Anspruch 5, **dadurch gekennzeichnet, dass** die Schutzvorrichtung (28a; 28b, 28c) dazu eingerichtet ist, mechanisch eine elektrische Kontaktierung des drahtgebundenen Ladegeräts zu verhindern.

7. Handwerkzeugakkulademittel nach einem der Ansprüche 5 oder 6, **dadurch gekennzeichnet, dass** die Schutzvorrichtung (28a; 28b, 28c) elektronische Bauteile aufweist, die einen Stromfluss in das Maschinenkontaktmittel (22a) des Handwerkzeugakkulademittels (10a) hinein verhindern.

8. Handwerkzeugakkulademittel nach einem der vorhergehenden Ansprüche, **gekennzeichnet durch** eine Überwachungselektronik (30a; 30b; 30c), die dazu eingerichtet ist, zumindest einen Ladevorgang zu überwachen.

9. Handwerkzeugakkulademittel nach einem der vorhergehenden Ansprüche, **gekennzeichnet durch** ein Verbindungselement (32a), welches das Akkukontaktmittel (16a) mechanisch und elektrisch untrennbar mit dem Ladekopplungsmittel (20a) verbindet, wobei die Kontaktmittel (16a, 22a) und das Ladekopplungsmittel (20a) auf zumindest zwei verschiedenen Seiten (34a, 36a) des Akkuaufnahmebereichs (14a) angeordnet sind.

10. Handwerkzeugakkulademittel nach einem der vorhergehenden Ansprüche, **dadurch gekennzeichnet, dass** ein konkaver Aufnahmebereich (58c) des Ladekopplungsmittels (20c) dazu eingerichtet ist, eine Handwerkzeugmaschine (24c) zumindest teilweise zu umschließen.

11. Handwerkzeugakkulademittel nach einem der vorhergehenden Ansprüche, **dadurch gekennzeichnet, dass** das Akkukontaktmittel (16a; 16b; 16c) dazu eingerichtet ist, eine Energie mit der Akkueinheit (18a; 18b; 18c) bidirektional auszutauschen.

12. System mit einem Handwerkzeugakkulademittel (10a; 10b; 10c) nach einem der Ansprüche 1 bis 11 und mit einer Akkueinheit (18a; 18b; 18c).

13. System nach Anspruch 12, **dadurch gekennzeichnet, dass** das Handwerkzeugakkulademittel (10a) dazu eingerichtet ist, bei einer Trennung der Akkueinheit (18a) von einer Handwerkzeugmaschine (24a) mit der Akkueinheit (18a) verbunden zu bleiben.

14. System nach Anspruch 12 oder 13, **dadurch gekennzeichnet, dass** das Akkukontaktmittel (16a; 16b; 16c) des Handwerkzeugakkulademittels (10a) das Handwerkzeugakkulademittel (10a) lösbar mechanisch und elektrisch mit dem Maschinenkontaktmittel (38a; 38b; 38c) der Akkueinheit (18a; 18b; 18c) verbindet.

15. System mit einem Handwerkzeugakkulademittel (10a; 10b; 10c) nach einem der Ansprüche 1 bis 11 und mit einer Handwerkzeugmaschine (24a; 24b; 24c).

16. System nach Anspruch 15, **dadurch gekennzeichnet, dass** das Handwerkzeugakkulademittel (10b; 10c) dazu eingerichtet ist, bei einer Trennung der Akkueinheit (18b; 18c) von der Handwerkzeugmaschine (24b; 24c) mit der Handwerkzeugmaschine (24b; 24c) verbunden zu bleiben.

17. System mit einem Handwerkzeugakkulademittel (10a; 10b; 10c) nach einem der Ansprüche 2 bis 11 mit einer Akkueinheit (18a; 18b; 18c) und mit einer Handwerkzeugmaschine (24a; 24b; 24c), **dadurch gekennzeichnet, dass** das Akkukontaktmittel (16a; 16b; 16c) des Handwerkzeugakkulademittels (10a; 10b; 10c) sowie das Akkukontaktmittel (50a; 50b; 50c) der Handwerkzeugmaschine (24a; 24b; 24c) als weiblicher Teil und das Maschinenkontaktmittel (22a; 22b; 22c) der Akkueinheit (18a; 18b; 18c) sowie das Maschinenkontaktmittel (38a; 38b; 38c) der Akkueinheit (18a; 18b; 18c) als männlicher Teil einer Steckverbindung ausgebildet sind.

## Claims

1. Charging means for a rechargeable battery for a hand tool, in particular for a rechargeable battery (12a; 12b; 12c) for a hand power tool, comprising at least one rechargeable battery receiving region (14a; 14b; 14c) for the releasable attachment of at least one rechargeable battery unit (18a; 18b; 18c) and at least one rechargeable battery contact means (16a; 16b; 16c), which is provided to be connected to a power tool contact means (38a; 38b; 38c) of the at least one rechargeable battery unit (18a; 18b; 18c), wherein at least one charge coupling means (20a; 20b; 20c) is configured to receive energy that is transmitted wirelessly, **characterized in that** the rechargeable battery contact means (16a; 16b; 16c) of the charging means for a rechargeable battery for a hand tool is configured to be electrically and mechanically connected in detachable fashion without tools to the one power tool contact means (38a; 38b; 38c) of the at least one rechargeable battery unit (18a; 18b; 18c).

2. Charging means for a rechargeable battery for a hand tool according to Claim 1, **characterized by** at least one detachable power tool contact means (22a; 22b; 22c), which is configured to be electrically and mechanically connected in detachable fashion to a rechargeable battery contact means (50a; 50b; 50c) of a hand power tool (24a; 24b; 24c) and to transmit energy to the hand power tool (24a; 24b; 24c).

3. Charging means for a rechargeable battery for a hand tool according to Claim 2, **characterized in that** the rechargeable battery contact means (16a; 16b; 16c) and the power tool contact means (22a; 22b; 22c) are designed in complementary fashion.

4. Charging means for a rechargeable battery for a hand tool according to one of the preceding claims, **characterized in that** the charge coupling means (20a; 20b; 20c) has an energy receiving coil (26a; 26b; 26c).

5. Charging means for a rechargeable battery for a hand tool at least according to Claim 2, **characterized in that** the power tool contact means (22a; 22b; 22c) has a protective device (28a; 28b; 28c), which is configured to prevent energy take-up from a wire-connected charging appliance by way of an electrically and/or mechanically acting means.

6. Charging means for a rechargeable battery for a hand tool according to Claim 5, **characterized in that** the protective device (28a; 28b; 28c) is configured to mechanically prevent electrical contacting of the wire-connected charging appliance.

7. Charging means for a rechargeable battery for a hand tool according to either of Claims 5 and 6, **characterized in that** the protective device (28a; 28b; 28c) has electronic components, which prevent a flow of current into the power tool contact means (22a) of the charging means (10a) for a rechargeable battery for a hand tool.

8. Charging means for a rechargeable battery for a hand tool according to one of the preceding claims, **characterized by** monitoring electronics (30a; 30b; 30c), which are configured to monitor at least one charging process.

9. Charging means for a rechargeable battery for a hand tool according to one of the preceding claims, **characterized by** a connecting element (32a), which mechanically and electrically connects the rechargeable battery contact means (16a) to the charge coupling means (20a) in non-disconnectable fashion, wherein the contact means (16a, 22a) and the charge coupling means (20a) are arranged on at least two different sides (34a, 36a) of the rechargeable battery receiving region (14a).

10. Charging means for a rechargeable battery for a hand tool according to one of the preceding claims, **characterized in that** a concave receiving region (58c) of the charge coupling means (20c) is configured to at least partly surround a hand power tool (24c).

11. Charging means for a rechargeable battery for a hand tool according to one of the preceding claims, **characterized in that** the rechargeable battery contact means (16a; 16b; 16c) is configured to exchange energy with the rechargeable battery unit (18a; 18b; 18c) in bidirectional fashion.

12. System comprising a charging means (10a; 10b; 10c) for a rechargeable battery for a hand tool according to one of Claims 1 to 11 and comprising a rechargeable battery unit (18a; 18b; 18c).

13. System according to Claim 12, **characterized in that** the charging means (10a) for a rechargeable battery for a hand tool is configured to remain connected to the rechargeable battery unit (18a) when the rechargeable battery unit (18a) is disconnected from a hand power tool (24a).

14. System according to Claim 12 or 13, **characterized in that** the rechargeable battery contact means (16a; 16b; 16c) of the charging means (10a) for a rechargeable battery for a hand tool mechanically and electrically connects the charging means (10a) for a rechargeable battery for a hand tool to the power tool contact means (38a; 38b; 38c) of the rechargeable battery unit (18a; 18b; 18c) in detachable fashion.

15. System comprising a charging means (10a; 10b; 10c) for a rechargeable battery for a hand tool according to one of Claims 1 to 11 and comprising a hand power tool (24a; 24b; 24c).

16. System according to Claim 15, **characterized in that** the charging means (10b; 10c) for a rechargeable battery for a hand tool is configured to remain connected to the hand power tool (24b; 24c) when the rechargeable battery unit (18b; 18c) is disconnected from the hand power tool (24b; 24c).

17. System comprising a charging means (10a; 10b; 10c) for a rechargeable battery for a hand tool according to one of Claims 2 to 11 comprising a rechargeable battery unit (18a; 18b; 18c) and comprising a hand power tool (24a; 24b; 24c), **characterized in that** the rechargeable battery contact means (16a; 16b; 16c) of the charging means (10a; 10b; 10c) for a rechargeable battery for a hand tool and the rechargeable battery contact means (50a; 50b; 50c) of the hand power tool (24a; 24b; 24c) are designed as female parts and the power tool contact means (22a; 22b; 22c) of the rechargeable battery unit (18a; 18b; 18c) and the power tool contact means (38a; 38b; 38c) of the rechargeable battery unit (18a; 18b; 18c) are designed as male parts of a plug-type connection.

## Revendications

1. Moyen de charge d'accumulateur d'outil à main, destiné en particulier à un accumulateur de machine-outil à main (12a ; 12b ; 12c), comprenant au moins une zone de logement d'accumulateur (14a ; 14b ; 14c) pour fixer de manière amovible au moins une unité à accumulateur (18a ; 18b ; 18c) et au moins un moyen de contact d'accumulateur (16a ; 16b) ; 16c) qui est destiné à être connecté à un moyen de contact de machine (38a ; 38b ; 38c) de l'au moins une unité à accumulateur (18a ; 18b ; 18c), dans lequel au moins un moyen de couplage de charge (20a ; 20b ; 20c) est conçu pour recevoir une énergie transmise sans fil,
**caractérisé en ce que** le moyen de contact d'accumulateur (16a ; 16b ; 16c) du moyen de charge d'accumulateur d'outil à main est conçu pour être relié électriquement et mécaniquement sans outil et de manière amovible audit moyen de contact de machine (38a ; 38b ; 38c) de l'au moins une unité à accumulateur (18a ; 18b ; 18c).

2. Moyen de charge d'accumulateur d'outil à main selon la revendication 1, **caractérisé par** au moins un moyen de contact de machine amovible (22a ; 22b ; 22c) conçu pour être relié électriquement et mécaniquement de manière amovible à un moyen de contact d'accumulateur (50a : 50b ; 50c) d'une machine-outil à main (24a ; 24b ; 24c) et pour transmettre de l'énergie à la machine-outil à main (24a ; 24b ; 24c).

3. Moyen de charge d'accumulateur d'outil à main selon la revendication 2, **caractérisé en ce que** le moyen de contact d'accumulateur (16a ; 16b ; 16c) et le moyen de contact de machine (22a ; 22b ; 22c) sont réalisés de manière complémentaire.

4. Moyen de charge d'accumulateur d'outil à main selon l'une des revendications précédentes, **caractérisé en ce que** le moyen de couplage de charge (20a ; 20b ; 20c) comprend une bobine réceptrice d'énergie (26a ; 26b ; 26c) .

5. Moyen de charge d'accumulateur d'outil à main selon la revendication 2, **caractérisé en ce que** le moyen de contact de machine (22a ; 22b ; 22c) comprend un dispositif de protection (28a ; 28b ; 28c) conçu pour empêcher le prélèvement d'énergie par un moyen à action électrique et/ou mécanique à partir d'un appareil de charge raccordé par fil.

6. Moyen de charge d'accumulateur d'outil à main selon la revendication 5, **caractérisé en ce que** le dispositif de protection (28a ; 28b, 28c) est conçu pour empêcher mécaniquement la mise en contact électrique de l'appareil de charge raccordé par fil.

7. Moyen de charge d'accumulateur d'outil à main selon l'une des revendications 5 ou 6, **caractérisé en ce que** le dispositif de protection (28a ; 28b, 28c) comprend des composants électroniques empêchant le passage de courant dans le moyen de contact de machine (22a) du moyen de charge d'accumulateur d'outil à main (10a).

8. Moyen de charge d'accumulateur d'outil à main selon l'une des revendications précédentes, **caractérisé par** une électronique de surveillance (30a ; 30b ; 30c) conçue pour surveiller au moins une opération de charge.

9. Moyen de charge d'accumulateur d'outil à main selon l'une des revendications précédentes, **caractérisé par** un élément de liaison (32a) qui relie mécaniquement et électriquement le moyen de contact d'accumulateur (16a) au moyen de couplage de charge (20a), dans lequel les moyens de contact (16a, 22a) et le moyen de couplage de charge (20a) sont disposés sur au moins deux côtés différents (34a, 36a) de la zone de logement d'accumulateur (14a).

10. Moyen charge d'accumulateur d'outil à main selon l'une des revendications précédentes, **caractérisé en ce qu'**une zone de logement concave (58c) du moyen de couplage de charge (20c) est conçue pour entourer au moins partiellement une machine-outil à main (24c).

11. Moyen charge d'accumulateur d'outil à main selon l'une des revendications précédentes, **caractérisé en ce que** le moyen de contact d'accumulateur (16a ; 16b ; 16c) est conçu pour échanger de manière bidirectionnelle de l'énergie avec l'unité à accumulateur (18a ; 18b ; 18c).

12. Système comprenant un moyen charge d'accumulateur d'outil à main (10a ; 10b ; 10c) selon l'une des revendications 1 à 11 et une unité à accumulateur (18a ; 18b ; 18c).

13. Système selon la revendication 12, **caractérisé en ce que** le moyen charge d'accumulateur d'outil à main (10a) est conçu pour rester connecté à l'unité à accumulateur (18a) lorsque l'unité à accumulateur (18a) est séparée d'une machine-outil à main (24a).

14. Système selon la revendication 12 ou 13, **caractérisé en ce que** le moyen de contact d'accumulateur (16a ; 16b ; 16c) du moyen charge d'accumulateur d'outil à main (10a) relie mécaniquement et électriquement de manière amovible le moyen de charge de batterie d'outil à main (10a) au moyen de contact de machine (38a ; 38b ; 38c) de l'unité à accumulateur (18a ; 18b ; 18c).

15. Système comprenant un moyen charge d'accumulateur d'outil à main (10a ; 10b ; 10c) selon l'une des revendications 1 à 11 et une machine-outil à main (24a ; 24b ; 24c).

16. Système selon la revendication 15, **caractérisé en ce que** le moyen charge d'accumulateur d'outil à main (10b ; 10c) est conçu pour rester relié à la machine à outil à main (24b ; 24c) lorsque l'unité de batterie (18b ; 18c) est séparée de la machine à outil à main (24b ; 24c).

17. Système comprenant un moyen de charge d'accumulateur d'outil à main (10a ; 10b ; 10c) selon l'une des revendications 2 à 11 comportant une unité à accumulateur (18a ; 18b ; 18c) et une machine-outil à main (24a ; 24b ; 24c), **caractérisé en ce que** le moyen de contact d'accumulateur (16a ; 16b ; 16c) du moyen de charge d'accumulateur d'outil à main (10a ; 10b ; 10c) et le moyen de contact d'accumulateur (50a ; 50b ; 50c) de la machine-outil à main (24a ; 24b ; 24c) sont réalisés sous la forme d'une partie femelle et **en ce que** le moyen de contact de machine (22a ; 22b ; 22c) de l'unité à accumulateur (18a ; 18b ; 18c) et le moyen de contact de machine (38a ; 38b ; 38c) de l'unité à accumulateur (18a ; 18b ; 18c) sont réalisés sous la forme d'une partie mâle d'un connecteur enfichable.
